# EUROPEAN PATENT SPECIFICATION

(11) **EP 0 696 421 B1**
(45) Date of publication and mention of the grant of the patent: **19.05.1999**
(21) Application number: 95112697.8
(22) Date of filing: 11.08.1995
(51) Int. Cl.: A01K 87/00, A01K 97/00

(54) **Fishing rod**
Angelrute
Canne à pêche

(30) Priority: 12.08.1994 JP 211874/94; 06.09.1994 JP 238526/94; 14.04.1995 JP 113773/95
(43) Date of publication of application: 14.02.1996
(60) Divisional application: 98120849.9
(73) Proprietor: DAIWA SEIKO INC., Higashikurume-shi, Tokyo (JP)
(72) Inventor: Oda, Hiroshi, Kawagoe-shi, Saitama (JP); Kimura, Shuichi, Akishima-shi, Tokyo (JP); Arata, Hiroshi, Musashimurayama-shi, Tokyo (JP); Ohta, Seiki, Tokyo (JP); Komura, Yasuo, Tokyo (JP)
(74) Representative: Grünecker, Kinkeldey, Stockmair & Schwanhäusser Anwaltssozietät

(56) References cited:
- DE-A- 3 246 801
- FR-A- 980 938
- FR-A- 1 592 422
- FR-A- 2 064 581
- FR-A- 2 090 915
- FR-A- 2 539 582
- US-A- 1 595 275
- US-A- 3 862 509

## Description

### BACKGROUND OF THE INVENTION

The present invention relates to a line insertion tool structure for a fishing rod, particularly applicable to a telescopic type intra-line fishing rod to facilitate the fishline insertion operation. A simplistic line insertion tool is known for example from FR-A-2,090,915.

### SUMMARY OF THE INVENTION

It is an object of the invention to provide an intra-line fishing rod which can be stored in a short size and can facilitate the insertion of a fishline.

In order to attain the above noted and other objects, the invention provides a line insertion tool for an intra-line fishing rod comprising the features as set forth in the characterising portion of claim 1.

Preferred embodiments of such a line insertion tool are laid down in the further subclaims.

In this specification, the term "a fishing rod of a telescopic type" means that a joint relation between a large diameter rod including a fishline introduction opening and a small diameter rod to be jointed to the large diameter rod satisfies a telescopic joint relation. That is, the remaining portions may be jointed together in an ordinary joint manner other than the telescopic manner. Also, the term "a fishline insertion member" used herein can also be considered as a fishline itself.

The above-described features and other novel features of the invention can be understood more clearly from the following description and the accompanying drawings.

### BRIEF DESCRIPTION OF THE DRAWINGS

In the accompanying drawings:
Fig. 1 is a partially sectional side view of a fishing rod with a line insertion tool according to an embodiment;
Fig. 2 is a side view showing the line insertion tool in Fig. 1;
Fig. 3 is an enlarged, longitudinally sectional view of the main portions of the fishing rod shown in Fig. 1;
Fig. 4 is an enlarged, transverse sectional view showing the main portion of the fishing rod shown in Fig. 1;
Fig. 5 is an enlarged plane view of the main portion of the fishing rod shown in Fig. 1;
Fig. 6 is a partially sectional view of the main portion of the fishing rod shown in Fig. 1 after a fishline is passed therethrough;

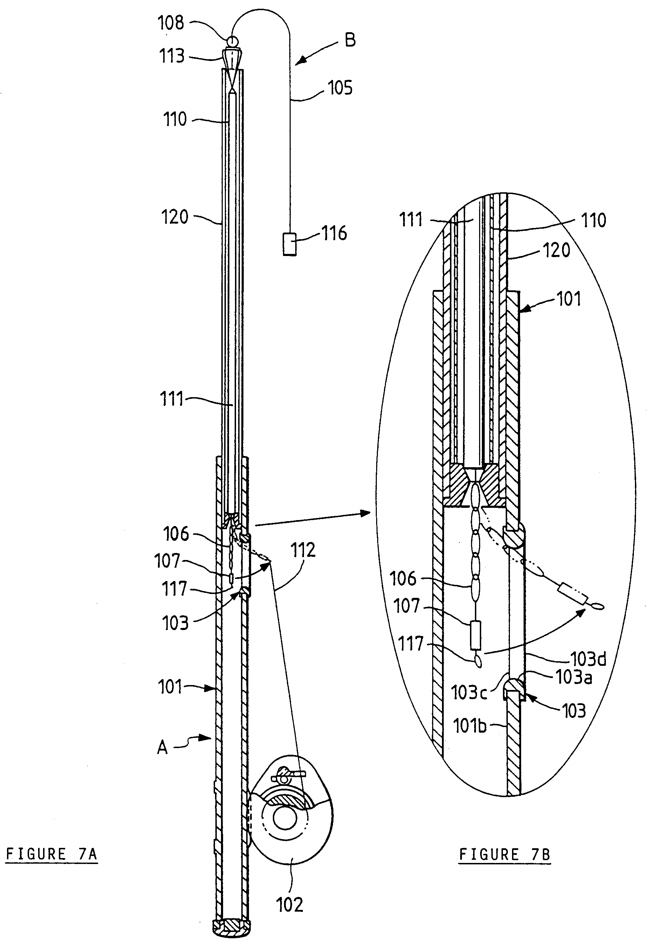

Fig. 7A is a longitudinally sectional view of a fishing rod according to a further embodiment of the invention, and Fig. 7B is an enlarged sectional view of the main portion of the fishing rod.

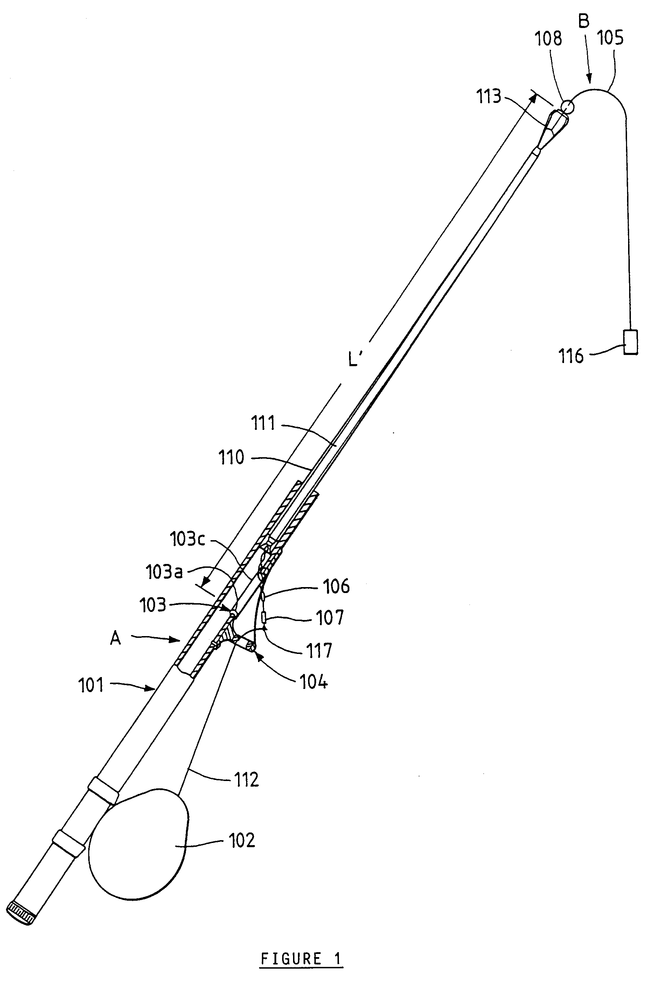

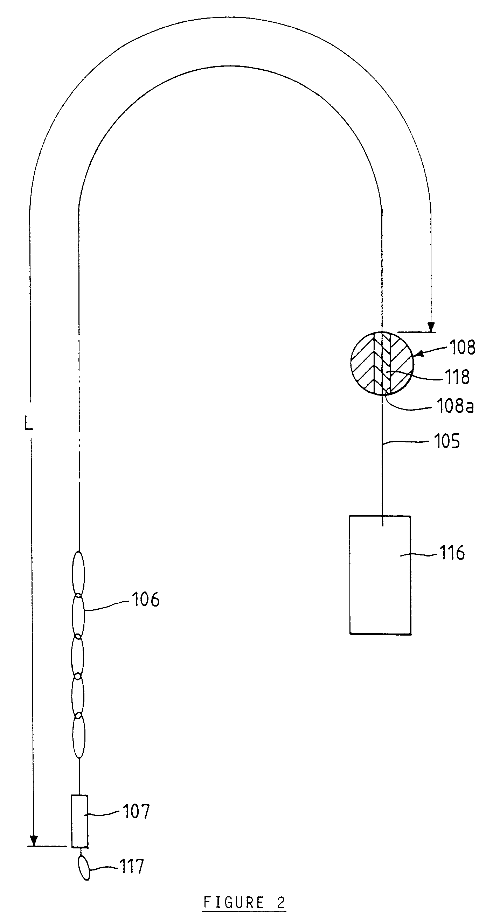

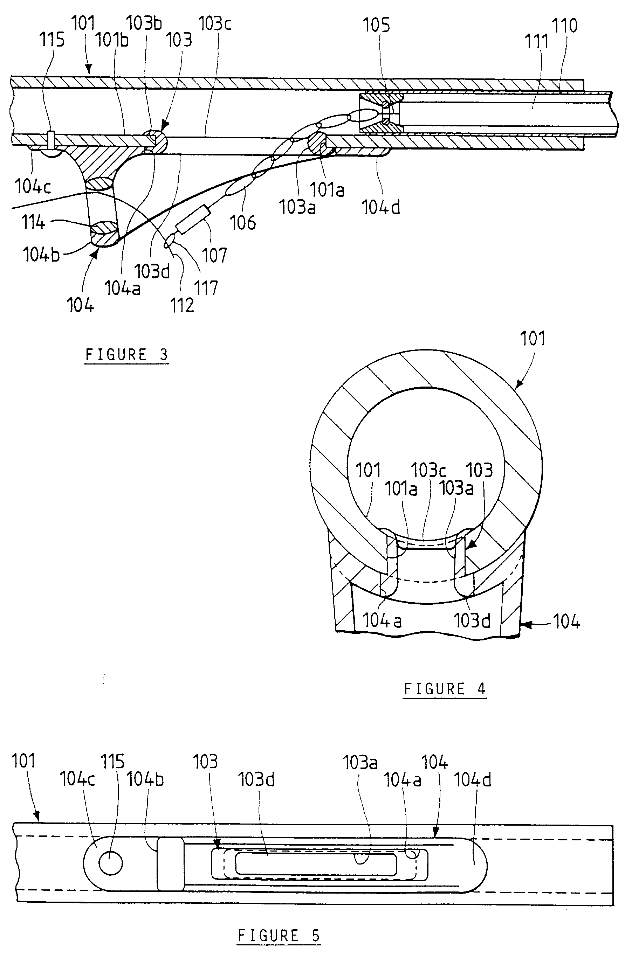

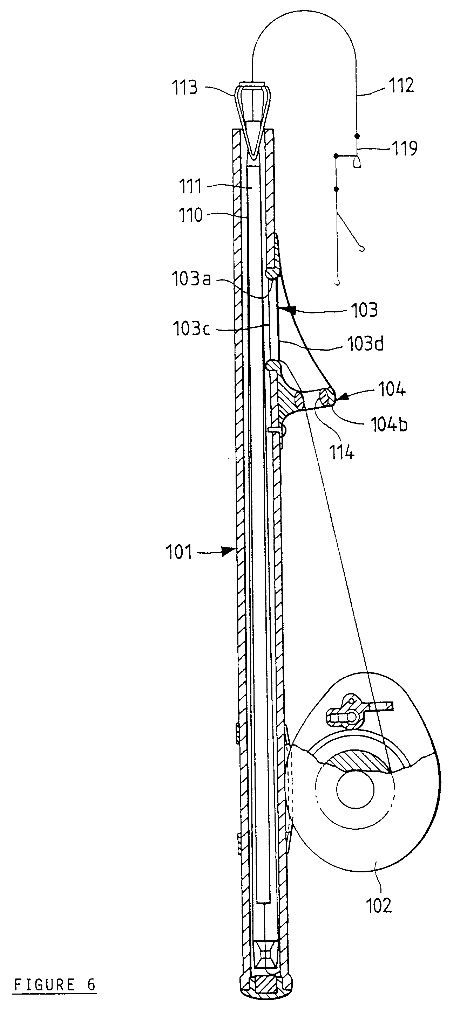

Figs. 1 to 6 show an embodiment of the line insertion tool in conjunction with a fishing rod A. An intra-line fishing rod A comprises a plurality of rods which are jointed to one another in a telescopic manner, that is, a base rod 101, a middle rod 110 disposed in front of the base rod 101, and a top rod 111 disposed in front of the middle rod 110 are jointed to one another in this order (see Fig. 3). In detail, the outer periphery of the joint portion of the middle rod 110 is formed in a tapered manner and is removably jointed to the inner periphery of the joint portion of the base rod 101, while the outer periphery of the joint portion of the top rod 111 is similarly formed in a tapered manner and is removably jointed to the inner periphery of the joint portion of the middle rod 110.

When a fishline 112 wound around a spool of a reel 102 mounted on the base rod 101 is required to be inserted into the interiors of the respective rods 101, 110 and 111, a line insertion tool B is inserted at first from the leading end of fishline guide 113 mounted on the top rod 111.

Each of the respective rods 101, 110 and 111 is structured such that, a prepreg sheet (not shown) cut to a tape-like rectangular shape is wound around a core metal (not shown) a proper number of times, tape is applied onto the outside of the prepreg sheet thus wound, the thus formed assembly is put into a heating furnace, and it is thermally processed into a united body according to a normal processing method.

To produce the prepreg sheet, a woven cloth is reinforced with a high-strength fiber such as carbon fiber, glass fiber, aramide fiber, alumina fiber, Kevler fiber, or other kinds of organic or inorganic fiber, and is then impregnated with thermosetting synthetic resin such as epoxy resin, phenol resin, polyester resin or the like.

The based rod 101 includes in the side surface thereof an elongated hole 101a to which a fishline introduction guide 103 is mounted and fixed, while a fishline guide frame 104 is fixed to the portion of the outer periphery of the base rod 101 situated outside the fishline introduction guide 103.

The fishline introduction guide 103 is formed of hard material such as metal, ceramics or the like.

The fishline introduction guide 103 defines in the central portion thereof a fishline guide hole 103a consisting of an elongated hole having a broad width and long in the axial direction of the base rod 101. Also, the fishline introduction guide 103 further includes on one side of the outside thereof a U-shaped recessed portion 103b into which the edge of the elongated hole 101a of the base rod 101 can be fitted.

The inside 103c of the fishline introduction guide 103 is formed such that it is substantially flush with the inside surface 101b of the base rod 101 or it is situated radially outside with respect to the base rod inside surface 101b.

The outside 103d of the fishline guide hole 103a of the fishline introduction guide 103 is formed open.

The fishline guide frame 104 includes in the central portion thereof a through hole 104a as best shown in Fig. 4, into which the fishline introduction guide 103 can be fitted, and it also includes on one side thereof a stand-up portion 104b as best shown in Fig. 3, to which is fixed a fishline guide 114 formed of hard material such as metal, ceramics or the like.

Also, the fishline guide frame 104 includes a flange portion 104c on the one side thereof, a through hole is formed in the flange portion 104c, and the flange portion 104c is fixed to the base rod 101 by a fixing pin 115 fitted into the through hole.

Further, the fishline guide frame 104 includes on the other side thereof another flange portion 104d which can be fixed to the outer periphery of the base rod 101 by use of a string or the like not shown in the drawing.

Referring now to the structure of the line insertion tool B, a fishline securing member 107 is mounted to one end of a line strip main body 105 through a flexible portion 106, a fixing member 116 is fixed to the other end of the line strip main body 105, and a stop member 108 is fitted with the other end of the line strip main body 105 where the fixing member 116 is fixed in such a manner that the stop member 108 can be stopped at a position properly distant away from the fishline securing member 107.

The line strip main body 105 can be easily and flexibly formed by coating the outer periphery of a stainless steel wire with resin.

In the illustrated embodiment, the flexible portion 106 is formed in such a manner that a plurality of metal rings are connected together and can be freely flexed by the weight of the fishline securing member 107. The flexible portion 106 is made of material the specific gravity of which is 2 or more, preferably 4 or more. The flexible portion 106 may be made of the same material as that of the line strip main body 105, such as stainless steel.

A fishline catch portion 117 formed of a string is fixed to the fishline securing member 107.

The stop member 108 is formed of synthetic resin into a ring with a through hole 108a to which an elastic support member 118 with a through hole is filled.

When the line insertion tool B is inserted through the intra-line fishing rod A, the middle rod 110 is drawn out from the base rod 101 while the top rod 111 is stored in the middle rod 110 as shown in Fig. 1.

Next, the stop member 108 is moved on the line strip main body 105 so that a length L from the fishline catch portion 117 of the line insertion tool B is set substantially equal to a length L' from the leading end of the fishline guide 113 of the top rod 111 to the reel (102) side of the fishline guide hole 103a of the fishline introduction guide 103.

After the line insertion tool B is prepared in the above-described manner, if the fishline securing member 107 of the line insertion tool B is inserted into the fishing rod from the leading end of the fishline guide 113 of the top rod 111, then the fishline insertion tool B drops down inside the fishing due to the weight of the fishline securing member and the stop member 108 is contacted with the leading end of the fishline guide 113.

If the stop member 108 is contacted with the leading end of the fishline guide 113, then the fishline securing member 107 is situated at the position of the fishline guide hole 103a of the fishline introduction guide 103. And, if the intra-line fishing rod A is inclined, the flexible portion 106 is flexed due to the weight of the fishline securing member 107 so that the fishline securing member 107 and fishline catch portion 117 are projected out externally from the fishline guide hole 103a of the fishline introduction guide 103.

In this state, the fishline 112 drawn out from the reel 102 is connected to the fishline catch portion 117, the line insertion tool B is pulled up and removed, and terminal tackles 119 are mounted on the fishline 112.

When the line insertion tool B is inserted into the intra-line fishing rod A, the middle rod 110 is drawn out from the base rod 101 while the reel side of the fishing rod A is put downward with the rod top side thereof facing upward and the top rod 111 is stored in the middle rod 110. And, when the line insertion tool B is inserted into the interior of the fishing rod and the fishing rod is inclined, the line insertion tool B drops down inside the fishing rod due to the weight of the fishline securing member 107 and the flexible portion 106 is fixed due to the weight of the fishline securing member 107, so that the fishline securing member 107 and fishline catch portion 117 are projected out externally from the fishline guide hole 103a of the fishline introduction guide 103. Due to this, the fishline 112 can be connected to the fishline catch portion 117 very easily. Also, by drawing out the fishline insertion tool B from inside the fishing rod, it is simple and easy to guide the fishline inside the fishing rod.

The length L of the line insertion tool B from the fishline catch portion 117 to the stop member 108 can be changed by moving the stop member 108 according to the length L' from the leading end of the fishline guide 113 of the top rod 111 to the fishline guide hole 103a of the fishline introduction guide 103.

Since the line insertion tool B is inserted through the intra-line fishing rod A while the reel (102) side of the rod faces downward and the top side of the rod faces upward, the top rod 111 is prevented from projecting out of the fishing rod A. Also, because the heavy reel mounting side of the fishing rod A is set lower than the rod top side thereof, the line insertion tool B can be inserted stably and the top rod 111 is prevented from projecting out and being broken.

Since the inside 103c of the fishline introduction guide 103 is formed to be substantially flush with the rod inside surface 101b or to be situated outside the rod inside surface 101b, when the line insertion tool B is inserted through the fishing rod A, the flexible portion 106 and fishline securing member 107 are prevented from being caught on the inside 103c of the fishline introduction guide 103.

Further, because the outside 103d of the fishline guide hole 103a of the fishline introduction guide 103 is formed open, the fishline securing member 147 and fishline catch portion 117 are easy to be projected externally from the fishline guide hole 103a of the fishline introduction guide 103.

When the intra-line fishing rod A and line insertion tool B are structured in the above-mentioned manner, if the line insertion tool B is inserted through the fishing rod A and the fishing rod A is inclined, then the line insertion tool B drops down due to the weight of the fishline securing member 107 and the flexible portion 106 is flexed due to the weight of the fishline securing member 107, so that the fishline securing member 107 and fishline catch portion 117 are projected externally from the fishline guide hole 103a of the fishline introduction guide 103. Due to this, the fishline 112 can be connected to the fishline catch portion 117 very easily and, simply by drawing out the line insertion tool B from inside the fishing rod, the fishline 112 can be guided into the fishing rod simply and easily.

Since the line insertion tool B is inserted through the intra-line fishing rod A while the reel (102) side thereof faces downward and the rod top side thereof faces upward, the top rod 111 is prevented from projecting out of the fishing rod A. Also, because the heavy reel mounting side of the fishing rod A is set lower than the rod top side thereof, the line insertion tool B can be inserted stably and the top rod 111 is prevented from projecting out and being broken.

Now, Fig. 15A and 15B show another applicatory embodiment, namely, Fig. 15A is a sectional side view of the fishing rod and Fig. 15B is a partially enlarged sectional side view of the main portions of the fishing rod shown in Fig. 15A.

In said embodiment, the intra-line fishing rod A comprises a plurality of rods which are jointed to one another, that is, a base rod 101, a middle rod 110 disposed in front of the base rod 101, and a top rod 111 disposed in front of the middle rod 110 are jointed to one another in this order. In detail, the outer periphery of the joint portion of the middle rod 110 is formed in a tapered manner and is removably jointed to the inner periphery of the joint portion of the base rod 101, while the outer periphery of the joint portion of the top rod 111 is similarly formed in a tapered manner and is removably jointed to the inner periphery of the joint portion of the middle rod 110.

Although the above-mentioned line catch portion 117 fixed to the fishline securing member 107 is formed of a string, it may be formed of metal.

Alternatively, there may be opened up a transverse hole in the fishline securing member 107 and the transverse hole may be used as a fishline catch portion.

Also, the flexible portion 106 may also be structured as a flexible long and narrow bar formed of rubber or the like, and the fishline catch portion side of such flexible portion may be flexed due to the weight of the flexible portion 106 itself.

And, the other end of the flexible portion formed as the flexible long and narrow rubber bar may be used as the fishline securing member 107.

Further, there may be opened a transverse hole in the fishline securing member 107 consisting of the flexible portion 106 formed as the flexible long and narrow rubber bar, and the transverse hole may be used as a line catch portion.

In the above description, although the fixing member 116 is fixed to the other end of the line strip main body 105 of the line insertion tool B, the fixing member may be omitted and the other end of the line strip main body 105 inserted through the stop member 108 may be folded back and retained to the stop member 108.

In the drawings, there are shown telescopic type fishing rods but, however, there may be used a fishing rod of a joint type in which a middle rod is jointed to the front side of the base rod 101.

## Claims

1. A line insertion tool for an intra-line fishing rod, **characterized by**:
a line strip main body (105) having a first end and a second end opposite from the first end;
a flexible portion (106) connected to the first end;
a fishline securing member (107) provided on the flexible portion for temporarily retaining a fishline thereon; and
a stop member (108) provided on the line strip main body (105) and located between the flexible portion (106) and the second end of the line strip main body (105), the stop member (108) being retained at a desired position on the line strip main body (105) to define a variable length between the fishline securing member (107) and the stop member (108).

2. A line insertion tool according to claim 1, wherein said fishline securing member is mounted to said first end of said line strip main body through said flexible portion.

3. A line insertion tool according to claim 1 or 2, wherein a fixing member is fixed to said second end of the line strip main body.

4. A line insertion tool according to claim 3, wherein said stop member is fitted with the second end of the line stop main body where the fixing member is fixed such that this stop member can be stopped at a position properly distant away from the fishline securing member.

5. A line insertion tool according to one of the preceding claims 1 to 4, wherein the line strip main body comprises a stainless steel wire peripherally coated with resin.

6. A line insertion tool according to one of the preceding claims 1 to 5, wherein the flexible portion is formed in such a manner that a plurality of metal rings are connected together and can be freely flexed by the weight of the fishline securing member.

7. A line insertion tool according to one of the preceding claims 1 to 6, wherein the flexible portion is made of material, the specific gravity of which is two or more, preferably four or more.

8. A line insertion tool according to one of the preceding claims 1 to 7, wherein the flexible portion is made of the same material as the line strip main body, in particular made of stainless steel.

9. A line insertion tool according to one of the preceding claims 1 to 8, wherein a fishline catch portion formed on a string is fixed to the fishline securing member.

10. A line insertion tool according to one of the claims 1 to 9, wherein the stop member is formed of synthetic resin into a ring with a through hole to which an elastic support member with a through hole is filled.

## Patentansprüche

1. Angelschnureinführhilfe für eine Angelrute mit Schnurinnenführung, **gekennzeichnet durch:**
einen Schnurzughauptkörper (105) mit einem ersten Ende und einem dem ersten Ende gegenüberliegenden zweiten Ende;
einen flexiblen Abschnitt (106), der mit dem ersten Ende verbunden ist;
ein an dem flexiblen Abschnitt vorgesehenes Angelschnurfesthalteteil (107) zum zeitweiligen Halten der Angelschnur an demselben; und
ein an dem Schnurzughauptkörper (105) vorgesehenes und zwischen dem flexiblen Abschnitt (106) und dem zweiten Ende des Schnurzughauptkörpers (105) angeordnetes Anschlagteil (108), wobei das Anschlagteil (108) an einer gewünschten Position an dem Schnurzughauptkörper (105) gehalten ist, um eine variable Länge zwischen dem Angelschnurfesthalteteil (107) und dem Anschlagteil (108) zu definieren.

2. Angelschnureinführhilfe nach Anspruch 1, bei der das Angelschnurhalteteil an dem ersten Ende des Schnurzughauptkörpers über den flexiblen Abschnitt befestigt ist.

3. Angelschnureinführhilfe nach Anspruch 1 oder 2, bei der ein Befestigungsteil an dem zweiten Ende des Schnurzughauptkörpers befestigt ist.

4. Angelschnureinführhilfe nach Anspruch 3, bei der das Anschlagteil mit dem zweiten Ende des Schnuranschlaghauptkörpers befestigt ist, wo das Befestigungsteil derart festgelegt ist, daß dieses Anschlagteil in gebührendem Abstand von dem Angelschnurhalteteil angehalten werden kann.

5. Angelschnureinführhilfe nach einem der vorgenannten Ansprüche 1 bis 4, bei der der Schnurzughauptkörper einen Draht aus rostfreiem Stahl umfaßt, der an seinem Umfang mit Kunststoff beschichtet ist.

6. Angelschnureinführhilfe nach einem der vorgenannten Ansprüche 1 bis 5, bei dem der flexible Abschnitt derart ausgebildet ist, daß eine Vielzahl von Metallringen miteinander verbunden sind und durch das Gewicht des Angelschnurhalteteils frei gebogen werden kann.

7. Angelschnureinführhilfe nach einem der vorgenannten Ansprüche 1 bis 6, bei der der flexible Abschnitt aus einem Material hergestellt ist, dessen spezifische Schwere zwei oder mehr, vorzugsweise vier oder mehr beträgt.

8. Angelschnureinführhilfe nach einem der vorgenannten Ansprüche 1 bis 7, bei der der flexible Abschnitt aus dem gleichen Material hergestellt ist wie der Schnurzughauptkörper, insbesondere aus rostfreiem Stahl hergestellt ist.

9. Angelschnureinführhilfe nach einem der vorgenannten Ansprüche 1 bis 8, bei dem ein Angelschnurfangabschnitt, der an einem Band bzw. einer Saite ausgebildet ist, an dem Angelschnurhalteteil befestigt ist.

10. Angelschnureinführhilfe nach einem der vorgenannten Ansprüche 1 bis 9, bei der das Anschlagteil aus synthetischem Harz als Ring mit einer Durchgangsöffnung ausgebildet ist, in die ein elastisches Halteteil mit einer Durchgangsöffnung gefüllt ist.

## Revendications

1. Outil d'introduction de ligne destiné à une canne à pêche à parcours de fil intérieur, caractérisé par :
un corps principal de tirage de ligne (105) comportant une première extrémité et une seconde extrémité opposée à la première extrémité;
une partie flexible (106) reliée à la première extrémité;
un élément d'assujettissement de ligne de pêche (107) disposé sur la partie flexible afin de retenir de manière temporaire une ligne de pêche sur celle-ci; et
un élément d'arrêt (108) disposé sur le corps principal de tirage de ligne (105) et situé entre la partie flexible (106) et la seconde extrémité du corps principal de tirage de ligne (105), l'élément d'arrêt (108) étant retenu à une position souhaitée sur le corps principal de tirage de ligne (105) afin de définir une longueur variable entre l'élément d'assujettissement de ligne de pêche (107) et l'élément d'arrêt (108).

2. Outil d'introduction de ligne selon la revendication 1, dans lequel ledit élément d'assujettissement de ligne de pêche est monté sur ladite première extrémité dudit corps principal de tirage de ligne au travers de ladite partie flexible.

3. Outil d'introduction de ligne selon la revendication 1 ou la revendication 2, dans lequel un élément de fixation est fixé sur ladite seconde extrémité du corps principal de tirage de ligne.

4. Outil d'introduction de ligne selon la revendication 3, dans lequel ledit élément d'arrêt est ajusté avec la seconde extrémité du corps principal de tirage de ligne sur laquelle est fixé l'élément de fixation, de sorte que cet élément d'arrêt peut être arrêté à une position appropriée de l'élément d'assujettissement de ligne de pêche.

5. Outil d'introduction de ligne selon l'une quelconque des revendications précédentes 1 à 4, dans lequel le corps principal de tirage de ligne comprend un fil en acier inoxydable comportant sur sa périphérie un revêtement en résine.

6. Outil d'introduction de ligne selon l'une quelconque des revendications précédentes 1 à 5, dans lequel la partie flexible est formée de telle manière que plusieurs anneaux métalliques sont reliés ensemble et peuvent être librement fléchis par le poids de l'élément d'assujettissement de ligne de pêche.

7. Outil d'introduction de ligne selon l'une quelconque des revendications précédentes 1 à 5, dans lequel la partie flexible se compose d'un matériau dont la densité est égale à deux ou davantage, de préférence à quatre ou davantage.

8. Outil d'introduction de ligne selon l'une quelconque des revendications précédentes 1 à 7, dans lequel la partie flexible se compose du même matériau que le corps principal de tirage de ligne, en particulier de l'acier inoxydable.

9. Outil d'introduction de ligne selon l'une quelconque des revendications précédentes 1 à 8, dans lequel une partie d'accrochage de ligne de pêche formée sur un cordon est fixée à l'élément d'assujettissement de ligne de pêche.

10. Outil d'introduction de ligne selon l'une quelconque des revendications précédentes 1 à 9, dans lequel l'élément d'arrêt est formé en résine synthétique à l'intérieur d'un anneau comportant un trou traversant sur lequel est ajusté un élément de support élastique comportant un trou traversant.
